# FASCICULE DE BREVET EUROPEEN

(11) **EP 1 896 322 B1**
(45) Date de publication et mention de la délivrance du brevet: **09.08.2017**
(21) Numéro de dépôt: 06778680.6
(22) Date de dépôt: 26.06.2006
(51) Int. Cl.: B64C 1/18, B64D 11/06, B60N 2/06

(54) **DISPOSITIF DE FIXATION D'UN RAIL DE SIEGE SUR UN PLANCHER, ET AERONEF MUNI D'UN TEL DISPOSITIF DE FIXATION.**
VORRICHTUNG ZUM BEFESTIGEN EINER SITZSCHIENE AUF EINEM BODEN UND FLUGZEUG, DAS MIT EINER SOLCHEN BEFESTIGUNGSVORRICHTUNG AUSGESTATTET IST
DEVICE FOR FIXING A SEAT RAIL ON A FLOOR, AND AIRCRAFT EQUIPPED WITH SUCH A FIXING DEVICE

(30) Priorité: 30.06.2005 FR 0551854
(43) Date de publication de la demande: 12.03.2008
(73) Titulaire: AIRBUS OPERATIONS (S.A.S), 31060 Toulouse (FR)
(72) Inventeur: RICAUD, Alexandre, F-82170 Grisolles (FR)
(74) Mandataire: Gicquel, Olivier Yves Gérard
(86) Numéro de dépôt international: PCT/FR2006/001485
(87) Numéro de publication internationale: WO 2007/003752

(56) Documents cités:
- EP-A- 1 533 174
- EP-A- 1 564 141
- US-A- 4 479 621
- US-A- 5 083 727
- US-A1- 2005 133 666
- US-B1- 6 554 225

## Description

L'invention concerne un dispositif de fixation d'un rail de siège sur un plancher, le rail de siège étant destiné à maintenir fixes sur ledit plancher des sièges pour passagers. Plus précisément, l'invention concerne un dispositif de fixation permettant de solidariser un rail de siège à un plancher d'un véhicule. Le dispositif selon l'invention permet donc de maintenir des sièges fixes sur un plancher de véhicule.

L'invention trouve des applications notamment dans le domaine de l'aéronautique. En effet, dans les aéronefs il existe généralement un espace destiné au transport de personnes, qui comporte des sièges dans lesquels les passagers peuvent s'asseoir. Les sièges sont fixés sur un plancher par l'intermédiaire des rails. Les rails sont eux mêmes fixés au plancher. Les sièges et les rails de siège doivent pouvoir encaisser des chocs, notamment lors de crashs, afin d'être maintenus en position sur le plancher dans toutes les circonstances.

L'invention trouve également des applications dans tout type de véhicule, tel qu'un véhicule automobile.

L'invention peut également trouver des applications dans les parcs d'attraction, pour des attractions dans lesquelles un habitacle, comportant des sièges passagers, est soumis à de nombreuses turbulences.

D'une manière générale, l'invention trouve des applications dès lors que le plancher sur lequel le rail de siège est fixé peut être rendu mobile.

Un aéronef comporte généralement au moins une cabine dans laquelle sont alignées plusieurs rangées de sièges pour passagers. Les sièges pour passagers sont fixés au plancher du fuselage par l'intermédiaire d'une pluralité de rails. Plus précisément, les pieds des sièges sont fixés aux rails. Les rails s'étendent le plus souvent parallèlement à l'axe de l'aéronef.

Dans l'ensemble de l'aéronef, les rails reposent sur des traverses situées au niveau du plancher de l'aéronef, lesdites traverses étant fixées au plancher. Cependant, au niveau des cases de train d'atterrissage de l'aéronef, les rails sont trop éloignés du plancher, de sorte qu'il n'est pas possible de faire reposer lesdits rails sur des traverses. Il est donc connu, au niveau des cases de train d'atterrissage, de maintenir les rails par des systèmes de fixation annexes. Ainsi, chaque rail, au niveau des cases de train d'atterrissage, est relié au plancher de l'aéronef par l'intermédiaire d'une biellette sur laquelle il est articulé.

Les rails centraux, c'est-à-dire les rails qui ne sont pas adjacents aux parois latérales de l'aéronef, sont par ailleurs maintenus en position les uns par rapports aux autres par des panneaux plancher. Les panneaux plancher sont fixés entre deux rails centraux adjacents, et forment un faux plancher au-dessus de la partie basse de l'aéronef qui comporte le plancher et les rails de siège.

En ce qui concerne les rails externes, c'est-à-dire les rails adjacents aux parois latérales de l'aéronef, ils sont maintenus non seulement par des biellettes mais également par des éléments anti-crash. En effet, lors d'un crash, l'ensemble du plancher de l'aéronef est projeté vers l'avant et tous les efforts de crash sont reportés sur les rails externes. Par crash, on entend un écrasement ou un atterrissage brusque de l'aéronef, ou un choc se rapprochant, d'un point de vu des efforts, d'un atterrissage brusque

Afin que les rails externes résistent aux efforts de crash, il est donc connu de les fixer à la paroi latérale de l'aéronef par des éléments anti-crash. Les éléments anti-crash sont solidaires d'une part d'une paroi latérale de l'aéronef, et d'autre part, d'une face latérale externe du rail externe. Par face latérale externe, on entend le côté du rail dirigé vers la paroi latérale de l'aéronef.

L'inconvénient d'un tel système de double fixation des rails externes par des biellettes et des éléments anti-crash est qu'il participe à augmenter la masse totale de l'aéronef. Par ailleurs, du fait de l'existence de ces deux moyens de fixation indépendants, à savoir la biellette et l'élément anti-crash, on augmente le temps nécessaire au montage des rails de siège dans un aéronef, ainsi que les risques d'erreurs de montage desdits rails.

Le document US 4,479,621 décrit toutes les caractéristiques du préambule de la revendication 1. Pour résoudre ces problèmes, l'invention propose un système de fixation des sièges de passagers au plancher d'un véhicule comportant un rail de siège, auquel les sièges sont fixés, et un dispositif de fixation entre ledit rail de siège et le plancher. Le dispositif de fixation comporte une pièce principale située entre le plancher du véhicule et le rail lui-même. La pièce principale du dispositif de fixation est apte à assurer une reprise structurale du rail. Plus précisément, la pièce principale est apte à reprendre des efforts parallèlement et perpendiculairement à l'axe du véhicule, et dans un plan vertical. Ainsi, le rail est à même de résister aussi bien à des chocs frontaux, tels que ceux dus à un crash, qu'aux turbulences et chocs auxquels, en général, un véhicule volant et/ou roulant peut être soumis.

La pièce principale du dispositif de fixation a une forme générale de type boomerang, c'est-à-dire en forme de Z. Plus précisément, ladite pièce s'étend transversalement dans un plan parallèle à l'axe du véhicule et perpendiculaire au plancher du véhicule. Une extrémité basse de la pièce principale est solidaire du plancher et une extrémité haute est solidaire du rail et d'une paroi verticale. La pièce principale est apte à encaisser les efforts horizontaux, parallèles au plancher du véhicule, du fait même de la géométrie de ladite pièce. En effet, la pièce principale s'étend depuis l'arrière vers l'avant du véhicule. Par arrière et avant, on entend arrière et avant par rapport au sens d'avancement du véhicule considéré. La pièce principale peut par ailleurs fléchir légèrement afin d'encaisser les chocs verticaux perpendiculaires à l'axe du véhicule.

Par l'intermédiaire d'une pièce unique, de poids inférieur au poids des deux pièces du dispositif de l'état de la technique habituellement utilisé, il est possible de reprendre l'ensemble des efforts, afin de maintenir des sièges en position sur le plancher d'un véhicule. Par ailleurs, le dispositif de fixation de l'invention peut permettre de renforcer la rigidité d'éventuelles cloisons verticales de séparation fixées sur le plancher.

L'invention a donc pour objet un plancher d'aéronef selon la revendication 1 dont un dispositif de fixation d'un rail de siège comporte une ferrure de liaison solidaire d'une part du plancher et d'autre part du rail de siège, ladite ferrure étant apte à supporter des efforts perpendiculaires au plan du plancher, et des efforts parallèles au plan du plancher. La ferrure s'étend en biais entre le plancher et le rail de siège, une extrémité basse de la ferrure étant solidaire du plancher et une extrémité haute de ladite ferrure étant solidaire du rail de siège. L'extrémité haute de la ferrure est également solidaire d'une paroi de compartimentation du plancher, ladite paroi étant verticale et perpendiculaire au rail de siège. Dans des exemples de réalisation particuliers de l'invention, il est possible de prévoir tout ou partie des caractéristiques supplémentaires suivantes :
- le dispositif de fixation comporte une pièce intermédiaire apte à solidariser la ferrure au rail de siège.
- la ferrure est en aluminium.
- la ferrure est dimensionnée pour résister à des cas de compressions.
En effet, dans certains cas de vol, par exemple lors du décollage, l'accélération est dirigée vers l'arrière.

L'invention a également pour objet un aéronef muni d'au moins un tel dispositif de fixation.

L'aéronef peut également comporter tout ou partie des caractéristiques supplémentaires suivantes :
- le dispositif de fixation relie un rail de siège externe à un plancher formant le toit d'une case de train d'atterrissage dudit aéronef.
- l'aéronef comporte sept dispositifs de fixation successifs, disposés le long du rail de siège externe au niveau du plancher de l'aéronef formant le toit de la case de train d'atterrissage dudit aéronef.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation schématique de deux sièges de passagers fixés le long d'un même rail, et des efforts auxquels les sièges et le rail peuvent être soumis ;
- Figure 2 : une vue en coupe d'un plancher et d'un rail de siège à l'endroit du dispositif de fixation selon l'invention ;
- Figures 3A et 3B : une représentation d'un exemple de réalisation du dispositif de fixation de l'invention, dépourvu de rail de siège (figure 3A) et muni d'un rail de siège (figure 3B) ;
- Figures 4A, 4B et 4C : un représentation schématique d'un exemple de réalisation particulier du dispositif de fixation selon l'invention ;
- Figure 5 : une représentation schématique en coupe d'une pluralité de dispositifs de fixation selon l'invention à l'endroit d'une case de train d'atterrissage d'un aéronef.

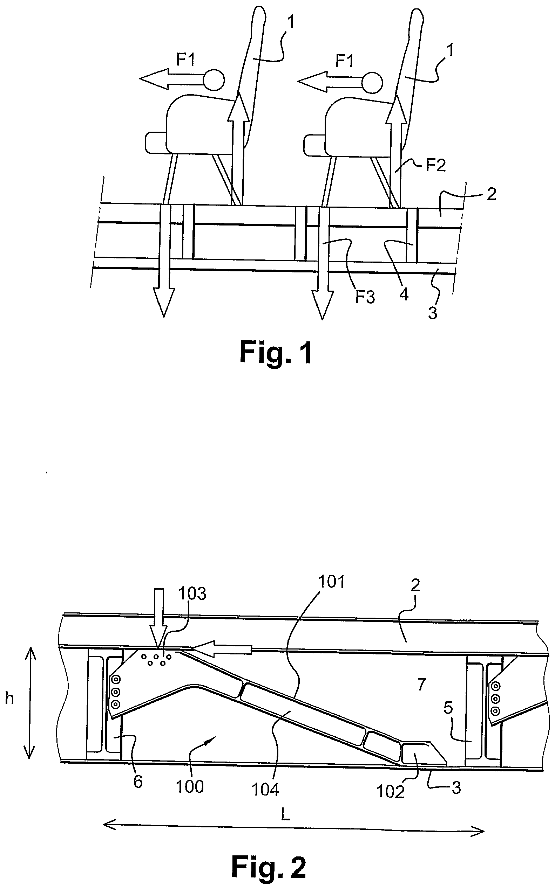

Sur la figure 1 sont représentés deux sièges 1 de passagers maintenus fixes par rapport à un plancher 3 d'un véhicule par l'intermédiaire de rails 2 (un seul rail visible sur la figure 1) et d'un dispositif de fixation 4 des rails 2 au plancher 3.

Lors d'un crash, ou plus généralement d'un choc frontal, il faut que le rail 2 puisse résister à des efforts de crash F1, de manière à ce que ledit rail 2 et les sièges 1 ne soient pas arrachés du plancher 3 et projetés vers l'avant du véhicule. Les efforts de crash F1 sont les efforts s'exerçant parallèlement au plan P1 du plancher 3. Il est également nécessaire que les sièges 1 et le rail 2 puissent supporter le poids des passagers, ainsi que les turbulences auxquelles, en général, le véhicule peut être soumis. Le rail 2 et les sièges 1 doivent donc résister aux efforts F2, F3 perpendiculaires au plan P1 du plancher 3.

Aussi, le dispositif de fixation 4 du rail 2 au plancher 3 doit être apte à reprendre les efforts de crash F1 et les efforts F2, F3 perpendiculaires au plan P1 du plancher 3.

Sur la figure 2 est représenté un exemple de réalisation, selon l'invention, d'un dispositif de fixation 100 d'un rail 2 de siège sur le plancher 3 d'un véhicule, tel qu'un aéronef.

Le dispositif de fixation 100 est apte à reprendre l'ensemble des efforts F1, F2, F3 auxquels les sièges 1 et les rails 2 peuvent être soumis.

Le dispositif de fixation 100 comporte une ferrure 101 de liaison. Une extrémité basse 102 de la ferrure 101 est solidaire du plancher 3 de l'aéronef. Une extrémité haute 103 de la ferrure 101 est solidaire du rail 2. Par extrémité basse 102 de la ferrure 101, on entend l'extrémité située au niveau du plancher 3. Par extrémité haute 103, on entend l'extrémité opposée à l'extrémité basse et située au niveau du rail 2. L'extrémité basse 102 est située en dessous de l'extrémité haute 103 par rapport au rail 2. Un corps 104 de la ferrure 101 s'étend en biais depuis l'extrémité basse 102 jusqu'à l'extrémité haute 103.

Le plancher 3 de l'aéronef comporte des parois 5, 6 s'étendant verticalement sur le plancher 3, entre ledit plancher 3 et les rails 2, de manière à ménager des compartiments 7 sur le plancher 3 (un seul compartiment est représenté sur la figure 2). Plus précisément, une paroi verticale arrière 5 et une paroi verticale avant 6, sur le plancher 3, délimitent un espace formant un compartiment 7.

La ferrure de liaison 101 est logée dans le compartiment 7. L'extrémité basse 102 de la ferrure 101 est située à proximité de la paroi verticale arrière 5, tandis que l'extrémité haute 103 de la ferrure 101 est située à proximité de la paroi verticale avant 6. La ferrure 101 s'étend dans une longueur L du compartiment 7, ainsi que dans la hauteur h dudit compartiment 7. Par longueur L du compartiment 7, on entend la dimension du compartiment 7 dans une direction parallèle au rail 2. Par hauteur h du compartiment 7, on entend la dimension du compartiment 7 perpendiculairement au rail 2. La ferrure 101 est donc disposée en biais dans ce compartiment 7.

L'extrémité haute 103 de la ferrure 101, solidaire du rail externe 2, est également solidaire de la paroi verticale avant 6 du compartiment 7, par l'intermédiaire par exemple de vis, ou par soudure, ou tout moyen de solidarisation. La liaison entre la paroi verticale avant 6 et la ferrure 101 permet de rigidifier ladite paroi avant 6, et donc plus généralement de rigidifier le compartiment 7.

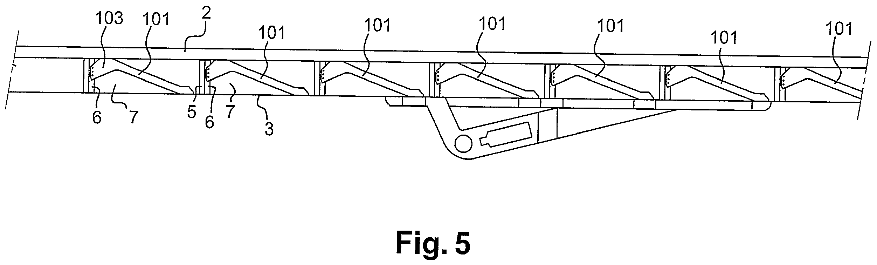

Dans le cas où le plancher 3 comporte plusieurs compartiments 7, la paroi verticale avant 6 d'un premier compartiment 7 forme la paroi verticale arrière 5 d'un second compartiment 7 situé plus en avant par rapport au premier compartiment 7 considéré. Par exemple, dans le cas particulier d'un plancher 3 situé au niveau d'une case de train d'atterrissage de l'aéronef, ledit plancher 3 comporte sept compartiments 7 successifs (figure 5).

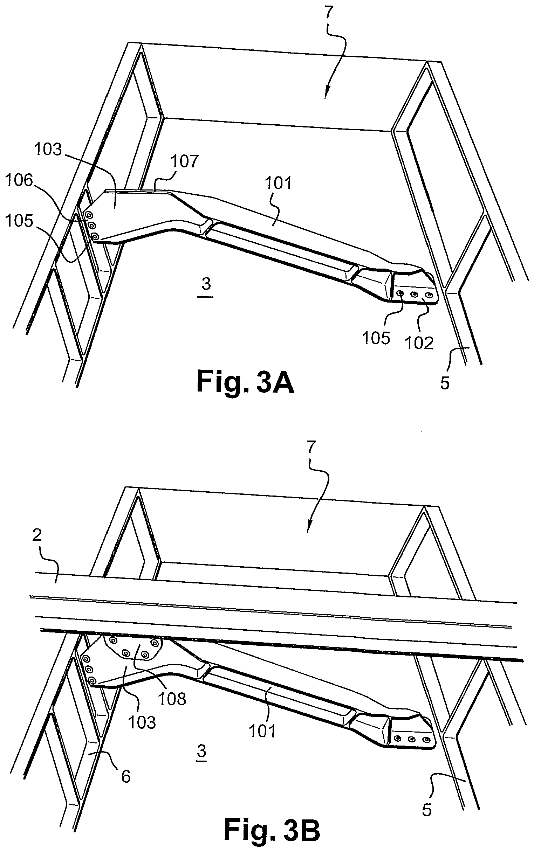

Sur la figure 3A est représenté le dispositif de fixation 100 selon l'invention dépourvu du rail 2. Plus précisément, la figure 3A représente un tel dispositif de fixation 100 au niveau de la case de train d'atterrissage d'un aéronef, ledit dispositif de fixation 100 étant destiné à recevoir un rail 2 externe.

La ferrure 101 s'étend depuis la paroi verticale arrière 5 jusqu'à la paroi verticale avant 6 d'un compartiment 7. L'extrémité basse 102 de la ferrure 101 est fixée au plancher 3 par l'intermédiaire de vis 105. L'extrémité haute 103 de la ferrure 101 est solidarisée à la paroi verticale avant 6 du compartiment 7 de train d'atterrissage également par l'intermédiaire de vis 105. Plus précisément, une pointe avant 106 de l'extrémité haute 103 de la ferrure 101 est solidarisée à la paroi verticale avant 6 du compartiment 7. La pointe 106 de l'extrémité haute 103 de la ferrure 101 s'étend dans un plan perpendiculaire à la paroi verticale avant 6 du compartiment 7 et au plan du plancher 3.

Le rail externe 2 (non représenté sur la figure 3A) est destiné à être solidarisé à une face supérieure 107 de l'extrémité haute 103 de la ferrure 101. Par face supérieure 107, on entend la face dirigée vers le haut, par opposition à une face dirigée vers le bas, c'est-à-dire vers le plancher 3.

Sur la figure 3B est représenté le dispositif de fixation 100 de la figure 3A, sur lequel repose le rail externe 2. Le rail externe 2 est fixé à l'extrémité haute 103 de la ferrure 101 au moyen d'une pièce intermédiaire 108.

Le rail 2 externe s'étend parallèlement à la ferrure 101 et traverse la partie supérieure des compartiments 7 successifs dans la longueur L desdits compartiments 7.

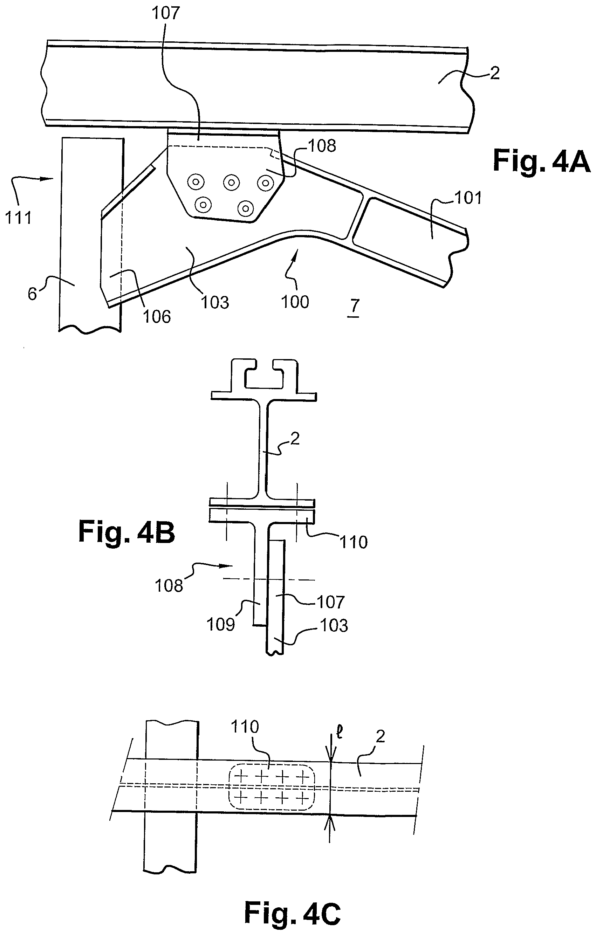

Sur la figure 4A est représenté un agrandissement du dispositif de fixation 100 de l'invention à l'endroit de l'extrémité haute 103 de la ferrure 101. La pointe 106 de l'extrémité haute 103 est solidaire de l'extrémité libre 111 de la paroi verticale avant 6 du compartiment 7. Par extrémité libre 111 de la paroi 6, on entend l'extrémité de la paroi verticale 6 située au niveau du rail 2 externe, par opposition à l'extrémité de ladite paroi 6 solidaire du plancher 3.

L'extrémité haute 103 de la ferrure 101 est solidarisée au rail 2 externe au moyen de l'élément intermédiaire 108. L'élément intermédiaire 108 a une forme générale en T, comme cela est représenté sur la figure 4B.

La face supérieure 107 de l'extrémité haute 103 de la ferrure 101 est fixée à la partie verticale 109 de l'élément intermédiaire 108 en T. Le rail 2 externe est fixé à l'élément intermédiaire 108 par la partie horizontale 110 du T. Ainsi, le rail 2 repose sur toute sa largeur l sur l'élément intermédiaire 108. Par largeur l, on entend la dimension du rail 2 parallèle au plan du plancher et perpendiculaire à l'axe longitudinal dudit rail.

Sur la figure 4C, on peut voir en transparence, sous le rail 2 externe, la partie horizontale 110 de l'élément intermédiaire 108.

Dans un autre exemple de réalisation de l'invention, il est possible de fixer le rail 2 directement à la ferrure 101 de liaison, c'est-à-dire sans qu'aucun élément intermédiaire 108 ne soit utilisé. Dans ce cas, il est possible de prévoir que la face supérieure 107 de l'extrémité haute 103 de la ferrure 101 présente une partie plate. Par partie plate, on entend que la face supérieure 107 s'étend dans un plan horizontal au plan du plancher 3. Ainsi, le rail 2 externe repose par toute la largeur l sur la face supérieure107 plate.

Dans un exemple particulier de réalisation de la ferrure 101 de l'invention, ladite ferrure 101 a une longueur L environ égale à 600 mm, une hauteur h environ égale à 151 mm et une épaisseur environ égale à 4 mm. La largeur l de la partie horizontale 110 de l'élément intermédiaire 108 est environ égale à 83 mm. Dans le cas où la partie haute 103 de la ferrure 101 est directement montée sur le rail 2, la partie supérieure plate 107 de la partie haute 103 de la ferrure 101 a une largeur environ égale à 83 mm.

Sur la figure 5 est représenté un rail 2 externe à l'endroit d'une case de train d'atterrissage de l'aéronef. Le plancher 3 de l'aéronef forme le toit de la case de train située sous ledit plancher 3. Sur ledit plancher 3 sont ménagés sept compartiments 7 s'étendant successivement le long du rail 2.

Chaque compartiment 7 comporte une ferrure 101 de liaison. Un compartiment 7 est délimité par une paroi verticale arrière 5 et par une paroi verticale avant 6, la paroi verticale arrière 5 d'un compartiment 7 avant formant la paroi verticale avant 6 d'un compartiment 7 arrière adjacent

En utilisant le dispositif de fixation 100 selon l'invention pour fixer le rail 2 externe d'un aéronef à l'endroit d'une case de train d'atterrissage, ou plus généralement pour fixer un rail de siège à un plancher d'un véhicule, on diminue sensiblement la masse totale des dispositifs de fixation 100 nécessaires à la fixation du rail 2 externe.

En effet, le poids moyen du dispositif de fixation 100 selon l'invention est d'environ 800 g, alors que les dispositifs de fixation de l'état de la technique, utilisés actuellement, pèsent environ 1 kg.

Le dispositif de fixation selon l'invention permet de réduire de manière non négligeable la masse totale du système de fixation des sièges passagers sur un plancher d'un véhicule.

La ferrure 101 permet par ailleurs de rigidifier les parois 5, 6 verticales de compartimentation du plancher 3.

Ainsi, d'une manière générale, le dispositif de fixation 100 de l'invention permet d'encaisser les efforts de crash et les efforts verticaux, ainsi que de renforcer la rigidité des compartiments 7 ménagés sur le plancher 3.

Une pièce unique, formée par la ferrure 101 de liaison, permet donc de remplir trois fonctions qui, jusqu'à présent, étaient remplies par trois pièces distinctes.

## Revendications

1. Plancher d'aéronef comportant des rails de siège s'étendant parallèlement les uns aux autres, au moins un rail de siège externe étant solidarisé au plancher par l'intermédiaire d'au moins un dispositif de fixation comportant une ferrure (101) de liaison s'étendant en biais depuis une extrémité basse arrière solidaire du plancher jusqu'à une extrémité haute avant solidaire du rail de siège externe, de manière à supporter des efforts perpendiculaires au plan du plancher, et des efforts parallèles au plan du plancher, **caractérisé en ce que** le plancher comporte une paroi (6) de compartimentation, ladite paroi (6) étant verticale et perpendiculaire au rail de siège et que l'extrémité haute de la ferrure est également solidaire de ladite paroi (6) de compartimentation du plancher.

2. Plancher d'aéronef selon la revendication 1, **caractérisé en ce que** la ferrure (101) de liaison a une forme en Z.

3. Plancher d'aéronef selon l'une des revendications 1 à 2, **caractérisé en ce que** le dispositif de fixation comporte une pièce intermédiaire (108) apte à solidariser la ferrure au rail de siège.

4. Plancher d'aéronef selon la revendication 3, **caractérisé en ce que** la pièce intermédiaire comporte un plat (110) solidaire du rail et une partie verticale (109) solidaire de l'extrémité haute de la ferrure.

5. Plancher d'aéronef selon l'une des revendications 1 à 4, **caractérisé en ce que** l'extrémité haute de la ferrure présente une face supérieure plate 107 sur laquelle le rail est destiné à reposer.

6. Plancher d'aéronef selon l'une des revendications 1 à 5, **caractérisé en ce que** la ferrure est en aluminium.

7. Plancher d'aéronef selon l'une des revendications 1 à 6, **caractérisé en ce qu'**il forme le toit d'une case de train d'atterrissage.

8. Plancher d'aéronef selon l'une des revendications 1 à 7, **caractérisé en ce qu'**il est segmenté en compartiments (7) par des parois de compartimentation (6) verticales, une ferrure de liaison étant logée dans chaque compartiment.

9. Aéronef **caractérisé en ce qu'**il comporte au moins un plancher selon l'une des revendications 1 à 8.

## Patentansprüche

1. Flugzeugboden, der Sitzschienen umfasst, die sich parallel zueinander erstrecken, wobei mindestens eine äußere Sitzschiene mittels mindestens einer Befestigungsvorrichtung mit dem Boden fest verbunden ist, die einen Verbindungsbeschlag (101) umfasst, der sich schräg von einem hinteren unteren Ende, das mit dem Boden fest verbunden ist, bis zu einem vorderen oberen Ende, das mit der äußeren Sitzschiene fest verbunden ist, erstreckt, um zu der Ebene des Bodens senkrechte Kräfte und zur Ebene des Bodens parallele Kräfte aufzunehmen, **dadurch gekennzeichnet, dass** der Boden eine Raumunterteilungswand (6) umfasst, wobei die Wand (6) vertikal und senkrecht zur Sitzschiene ist, und dass das obere Ende des Beschlags ebenfalls mit der Raumunterteilungswand (6) des Bodens fest verbunden ist.

2. Flugzeugboden nach Anspruch 1, **dadurch gekennzeichnet, dass** der Verbindungsbeschlag (101) die Form eines Z aufweist.

3. Flugzeugboden nach einem der Ansprüche 1 bis 2, **dadurch gekennzeichnet, dass** die Befestigungsvorrichtung ein Zwischenteil (108) umfasst, das, den Beschlag fest mit der Sitzschiene verbinden kann.

4. Flugzeugboden nach Anspruch 3, **dadurch gekennzeichnet, dass** das Zwischenstück eine ebene Fläche (110), die mit der Schiene fest verbunden ist, und einen vertikalen Teil (109), der mit dem oberen Ende des Beschlags fest verbunden ist, umfasst.

5. Flugzeugboden nach einem der Ansprüche 1 bis 4, **dadurch gekennzeichnet, dass** das obere Ende des Beschlags eine flache obere Seite (107) aufweist, auf der die Schiene aufliegen soll.

6. Flugzeugboden nach einem der Ansprüche 1 bis 5, **dadurch gekennzeichnet, dass** der Beschlag aus Aluminium ist.

7. Flugzeugboden nach einem der Ansprüche 1 bis 6, **dadurch gekennzeichnet, dass** er das Dach eines Fahrwerkskastens bildet.

8. Flugzeugboden nach einem der Ansprüche 1 bis 7, **dadurch gekennzeichnet, dass** er durch vertikale Raumunterteilungswände (6) in Räume (7) unterteilt ist, wobei in jedem Raum ein Verbindungsbeschlag aufgenommen ist.

9. Flugzeug, **dadurch gekennzeichnet, dass** es mindestens einen Boden nach einem der Ansprüche 1 bis 8 umfasst.

## Claims

1. Aircraft floor comprising seat rails extending parallel to one another, at least one external seat rail being secured to the floor by means of at least one fastening device comprising a connecting bracket (101) extending obliquely from a rear bottom end secured to the floor to a front top end secured to the external seat rail, so as to bear forces perpendicular to the plane of the floor and forces parallel to the plane of the floor, **characterized in that** the floor comprises a compartment-forming wall (6), said wall (6) being vertical and perpendicular to the seat rail, and **in that** the top end of the bracket is also secured to said compartment-forming wall (6) of the floor.

2. Aircraft floor according to Claim 1, **characterized in that** the connecting bracket (101) has a Z shape.

3. Aircraft floor according to either of Claims 1 and 2, **characterized in that** the fastening device comprises an intermediate part (108) designed to secure the bracket to the seat rail.

4. Aircraft floor according to Claim 3, **characterized in that** the intermediate part comprises a flat portion (110) secured to the rail and a vertical portion (109) secured to the top end of the bracket.

5. Aircraft floor according to one of Claims 1 to 4, **characterized in that** the top end of the bracket has a flat upper face (107) on which the rail is intended to rest.

6. Aircraft floor according to one of Claims 1 to 5, **characterized in that** the bracket is made of aluminum.

7. Aircraft floor according to one of Claims 1 to 6, **characterized in that** it forms the roof of a landing gear box.

8. Aircraft floor according to one of Claims 1 to 7, **characterized in that** it is segmented into compartments (7) by vertical compartment-forming walls (6), a connecting bracket being housed in each compartment.

9. Aircraft, **characterized in that** it comprises at least one floor according to one of Claims 1 to 8.
